# DEMANDE DE BREVET EUROPEEN

(11) **EP 1 752 335 A2**
(43) Date de publication de la demande: **14.02.2007**
(21) Numéro de dépôt: 06024686.5
(22) Date de dépôt: 21.07.2003
(51) Int. Cl.: B60Q 1/30, B60Q 1/48

(54) **Feu de signalisation et dispositif d'affichage agencés dans un boîtier formé en partie par la carrosserie d'un véhicule**

(30) Priorité: 25.07.2002 FR 0209466
(62) Demande divisionnaire de: 03291805.4
(71) Demandeur: VALEO VISION, 93012 Bobigny Cédex (FR)
(72) Inventeur: Simon, Laurent, 78180 Montigny le Bretonneux (FR); Trebouet, Marcel, 78860 Saint Nom la Breteche (FR)
(74) Mandataire: Renous Chan, Véronique

(57) **Abrégé**

L'invention propose un agencement de la partie arrière d'un véhicule (10) automobile (10) qui comporte un feu de signalisation (20) de freinage orienté vers l'extérieur du véhicule (10) et un dispositif d'affichage (22) d'une information représentative de la distance entre le véhicule (10) et un obstacle orienté globalement vers l'intérieur du véhicule (10),
caractérisé en ce que le feu de signalisation (20) et le dispositif d'affichage (22) sont agencés à l'intérieur d'un boîtier (18) fermé hermétiquement qui est formé au moins en partie par une partie de la carrosserie du véhicule (10).

## Description

L'invention propose un agencement de la partie arrière d'un véhicule automobile qui comporte un feu de signalisation de freinage orienté vers l'extérieur du véhicule et un dispositif d'affichage d'une information représentative de la distance entre le véhicule et un obstacle orienté globalement vers l'intérieur du véhicule.

Parmi les équipements électroniques des véhicules automobiles actuels on cite notamment un feu de signalisation de freinage, communément appelé troisième feu "stop", et un système d'assistance au parcage.

Le feu de signalisation est agencé à proximité d'un bord supérieur ou inférieur du panneau vitré arrière du véhicule.

Le système d'assistance au parcage comporte un capteur agencé dans un bouclier pare-chocs arrière du véhicule et un élément de signalisation qui est constitué d'un émetteur sonore et d'un dispositif d'affichage, qui permet à l'utilisateur d'avoir une notion de la distance entre l'arrière du véhicule et un obstacle.

Le dispositif d'affichage est généralement agencé à l'arrière du véhicule de façon à être visible par le conducteur lorsque celui-ci effectue une manoeuvre de parcage.

Le feu de signalisation et le dispositif d'affichage étant tous deux agencés à l'arrière du véhicule, il a été proposé, notamment dans le document EP-A-0.683.068, d'intégrer le feu de signalisation et le dispositif d'affichage dans le boîtier d'un même module d'équipement qui est accolé contre une face interne de la vitre arrière du véhicule, et à proximité du bord inférieur de celle-ci.

Pour former le flux lumineux du feu de signalisation, la paroi arrière du boîtier est composée de nombreuses lentilles, et elle est accolée contre la paroi interne de la lunette arrière.

Pour de nombreux véhicules, la lunette arrière est inclinée par rapport à la verticale. La plaque arrière du boîtier doit donc être aussi inclinée.

Cependant, lorsque la lunette arrière est fortement inclinée, la plaque arrière est elle aussi fortement inclinée, et, pour que le faisceau lumineux soit suffisamment visible, elle doit recouvrir une surface importante de la lunette arrière.

La fabrication d'une telle plaque étant relativement onéreuse, le fait d'avoir une plaque de grandes dimensions augmente de ce fait le prix du module d'équipement.

De ce fait, il a été proposé des éléments d'équipement qui comportent un élément optique, comme par exemple une lentille de Fresnel, qui est agencé à l'intérieur du boîtier, et la paroi arrière du boîtier est réalisée par une plaque transparente en verre ou en plexiglas.

Lorsque le boîtier est monté sur le véhicule, la plaque est fixée à la lunette arrière par des moyens permettant une étanchéité, notamment pour éviter la formation de buée sur les faces en vis-à-vis de la plaque et de la lunette arrière.

La lunette arrière réalise donc les fonctions de protection et d'étanchéité de la plaque transparente qui est alors inutile.

Pour remédier à ces inconvénients, l'invention propose un agencement de la partie arrière d'un véhicule du type décrit précédemment, caractérisé en ce que le feu de signalisation et le dispositif d'affichage sont agencés à l'intérieur d'un boîtier fermé hermétiquement qui est formé au moins en partie par une partie de la carrosserie du véhicule.

Selon d'autres caractéristiques de l'invention :
- le boîtier est formé en partie par une partie d'un pavillon globalement horizontal de la carrosserie du véhicule et/ou par une partie d'un panneau transversal arrière de la carrosserie du véhicule qui prolonge l'extrémité longitudinale arrière du pavillon ;
- le feu de signalisation et le dispositif d'affichage sont agencés verticalement à une distance de l'élément de carrosserie inférieure à la distance verticale entre l'élément de garniture et la face inférieure de l'élément de carrosserie, et le boîtier comporte un guide de lumière qui guide le flux lumineux émis par les éléments électroluminescents du dispositif d'affichage vers une ouverture du boîtier agencée verticalement au-dessous de l'élément de garniture ;
- le panneau transversal arrière comporte une ouverture qui est obturée par un élément perméable à la lumière qui est traversé par le flux lumineux généré par les éléments électroluminescents du feu de signalisation ;
- une paroi transversale avant du boîtier comporte une ouverture obturée par un élément perméable à la lumière qui est traversé par le flux lumineux généré par les éléments électroluminescents du dispositif d'affichage ;
- l'agencement comporte un unique connecteur électrique d'alimentation de toutes les pistes d'alimentation électrique des éléments électroluminescents appartenant au feu de signalisation et au dispositif d'affichage ;
- les composants du feu de signalisation et les composants du dispositif d'affichage sont portés par une platine porte-composants commune ;
- les composants du feu de signalisation, du dispositif d'affichage respectivement, sont agencés sur une face de la platine porte-composants commune respectivement ;
- le dispositif d'affichage comporte plusieurs éléments électroluminescents dont au moins deux éléments électroluminescents sont de couleurs différentes.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective de l'arrière d'un véhicule automobile comportant un agencement conforme aux enseignements de l'invention ;
- la figure 2 est une section suivant un plan longitudinal vertical de l'agencement représenté à la figure 1 ;
- la figure 3 est une vue similaire à celle de la figure 2 représentant un autre mode de réalisation de l'invention ;
- la figure 4 est une vue similaire à celle de la figure 2 représentant encore un autre mode de réalisation de l'invention.

Pour la description de l'invention, on adoptera à titre non limitatif les orientations verticale, longitudinale et transversale selon le repère V, L, T indiqué aux figures.

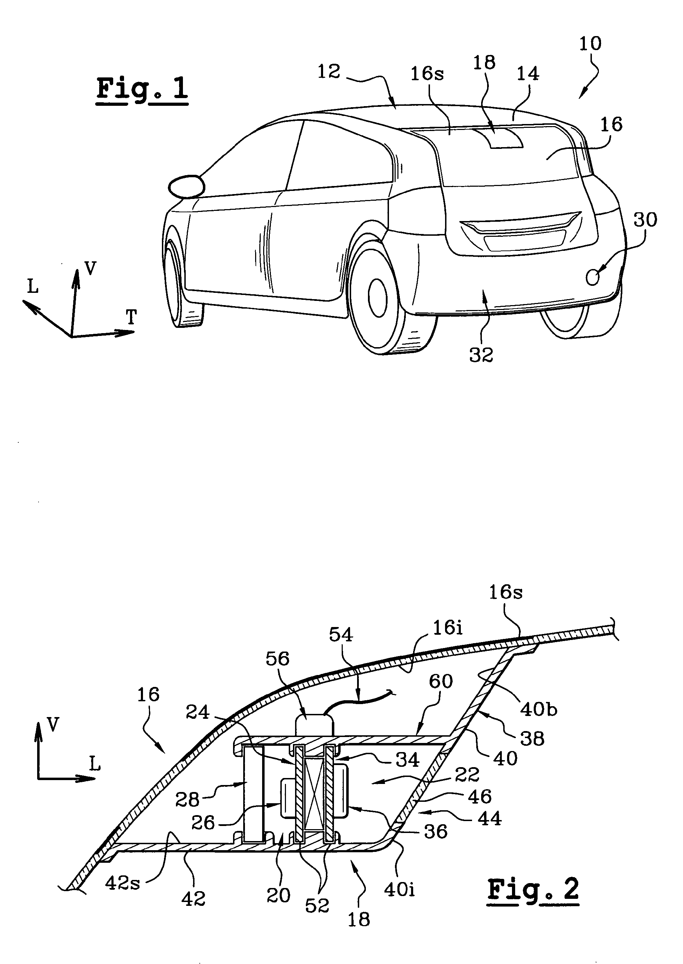

On adoptera aussi la direction d'arrière en avant comme étant la direction longitudinale et de droite à gauche en se reportant à la figure 1 .

Dans la description qui va suivre, des éléments identiques, similaires ou analogues seront désignés par les mêmes chiffres de référence.

On a représenté à la figure 1 un véhicule automobile 10 conventionnel dont la partie supérieure de la carrosserie forme un pavillon 12 qui s'étend longitudinalement globalement horizontalement, et dont l'extrémité longitudinale arrière 14 est prolongé par panneau vitré 16, ou lunette arrière, qui s'étend globalement transversalement et verticalement, et dont le bord supérieur 16s est recourbé vers l'avant.

Un boîtier 18 d'équipement est agencé à proximité du bord transversal supérieur 16s de la lunette 16 arrière et contre la face interne 16i de celui-ci.

Comme on peut le voir aux figures 2 à 4, le boîtier 18 d'équipement comporte un feu de signalisation 20 de freinage et un dispositif d'affichage 22 d'une information représentative de la distance entre le véhicule 10 et un obstacle.

Le feu de signalisation 20 est orienté longitudinalement vers l'extérieur du véhicule 10 c'est-à-dire vers l'arrière. Il comporte une platine porte-composants 24 électroniques qui comporte elle-même au moins une piste conductrice (non représentée), des composants électroniques, notamment des éléments électroluminescents 26 qui sont généralement des ampoules ou des diodes électroluminescentes et qui émettent un flux lumineux généralement de couleur rouge. Le feu de signalisation 20 comporte aussi un élément optique 28 comme une lentille de Fresnel qui permet d'orienter le flux lumineux généré par les éléments électroluminescents 26 vers l'arrière.

Le dispositif d'affichage 22 est un sous-ensemble d'un dispositif d'aide au parcage qui comporte un capteur 30, généralement à ultrasons, qui est agencé dans le bouclier arrière 32 du véhicule 10, un calculateur (non représenté) pour calculer la distance entre le véhicule 10 et un obstacle situé à l'arrière du véhicule 10, et un dispositif de signalisation pour informer le conducteur de la distance entre le véhicule 10 et l'obstacle.

En règle générale, le dispositif de signalisation comporte un avertisseur sonore combiné avec le dispositif d'affichage 22 qui émettent un son, respectivement une signalisation optique, représentatifs de la distance entre le véhicule 10 et l'obstacle.

Le dispositif d'affichage 22 comporte plusieurs zones d'affichage de couleurs différentes, généralement jaune, verte et rouge, qui s'allument successivement selon que la distance entre le véhicule 10 et l'obstacle diminue.

Le dispositif d'affichage 22 est constitué d'une platine porte-composants 34 électroniques qui comporte elle-même au moins une piste conductrice (non représentée), des composants électroniques, notamment des éléments électroluminescents 36 qui sont généralement des ampoules ou des diodes.

Pour être visible du conducteur, le dispositif d'affichage 22 est orienté longitudinalement vers l'intérieur du véhicule 10, c'est-à-dire vers l'avant.

Le boîtier 18 d'équipement comporte aussi un élément structurel 38 ouvert qui est agencé à l'intérieur du véhicule 10, et qui porte le feu de signalisation 20 et le dispositif d'affichage 22.

L'élément structurel 38 est réalisé en une seule pièce, par exemple par moulage, et il est formé d'une première paroi 40 transversale avant, d'une deuxième paroi 42 inférieure globalement horizontale et de deux parois latérales (non représentées).

La paroi avant 40 comporte une ouverture 44 située en vis-à-vis des éléments électroluminescents 36 du dispositif d'affichage 22 qui est obturée par un élément 46 perméable à la lumière et qui est traversée par le flux lumineux généré par les éléments électroluminescents 36 du dispositif d'affichage 22.

La deuxième paroi 42 de l'élément structurel 38 est reliée à l'extrémité inférieure 40i de la paroi avant 40 et elle comporte des moyens de support du feu de signalisation 20, du dispositif d'affichage 22 et de l'élément optique 28.

Conformément à l'invention, et comme on l'a représenté à la figure 1, l'élément structurel 38 est fixé à la face interne 16i de la lunette 16 arrière pour fermer de manière hermétique le boîtier 18.

L'élément structurel 38 peut être fixé par tout moyen connu, cependant, selon un mode de réalisation préféré, l'élément structurel 38 est fixé par collage, qui est un mode de fixation peu visible au travers de la lunette arrière 16.

Selon la configuration de la structure de caisse du véhicule 10, le bord supérieur 16s de la lunette 16 arrière s'étend plus ou moins vers l'avant du véhicule 10. Dans certains cas, il se peut que si l'élément structurel 38 est uniquement fixé à la lunette 16 arrière, l'espace délimité par le boîtier 18 soit insuffisant pour loger entièrement le feu de signalisation 20 et le dispositif d'affichage 22.

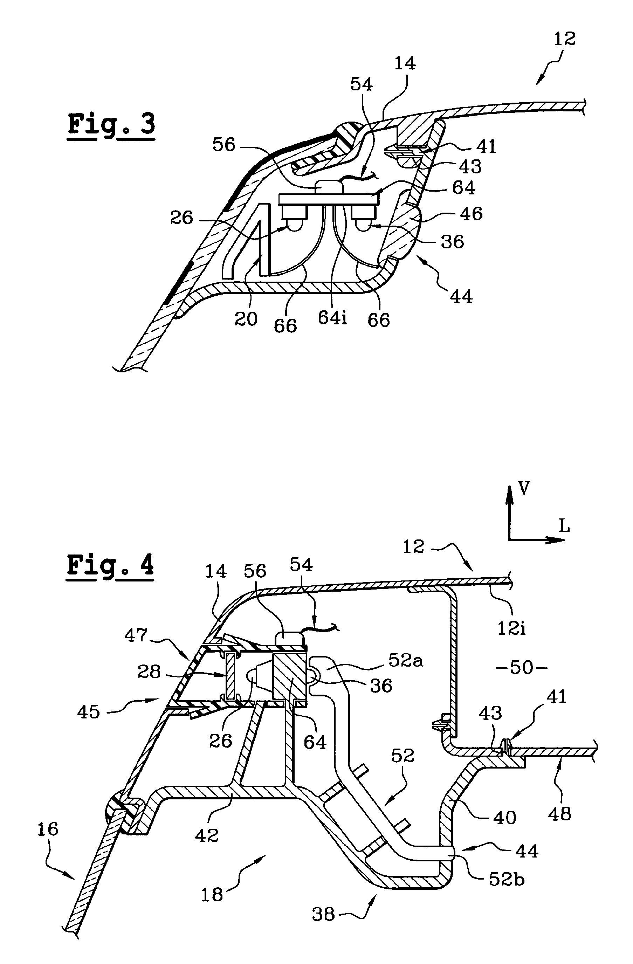

C'est pourquoi, selon une variante de réalisation de l'invention, représentée à la figure 3, l'élément structurel 38 est fixé à la lunette 16 arrière et au pavillon 12, et selon une autre variante de l'invention représentée à la figure 4, pour laquelle le bord transversal 14 arrière du pavillon 12 est recourbé vers le bas enformant un panneau transversal arrière, l'élément structurel 38 est uniquement fixé à l'extrémité arrière 14 du pavillon 12.

Ainsi, quelle que soit la configuration de la carrosserie du véhicule 10, le boîtier 18 est formé en partie par une partie de la carrosserie du véhicule 10, que ce soit une partie de la lunette 16 arrière, une partie du pavillon 12 ou bien une partie de chaque.

Le pavillon 12, qui est généralement réalisé en tôle, est un élément opaque, autorisant ainsi des moyens de fixation de l'élément structurel 38 qui sont plus efficaces que le collage, ou dont la mise en oeuvre est plus aisée, et qui sont moins esthétiques. Cependant, ces moyens de fixation étant en général dissimulés à l'intérieur du boîtier 18, ils ne nuisent pas à l'esthétique générale du véhicule 10.

Ces moyens de fixation consistent ici en des pattes 41 déformables élastiquement qui sont reçues dans des logements 43 complémentaires du pavillon 12.

Lorsque l'extrémité arrière 14 du pavillon 12 est recourbée vers l'arrière, celle-ci forme un obstacle au flux lumineux généré par le feu de signalisation 20. C'est pourquoi, comme on l'a représenté à la figure 4, l'extrémité arrière 14 du pavillon12 comporte une ouverture 45 qui est obturée de manière étanche par un élément 47 perméable à la lumière. Cet élément est alors traversé par le flux de lumière généré par les éléments électroluminescents 26 du feu de signalisation 20.

Le boîtier 18 est ainsi globalement agencé au coin supérieur arrière du véhicule 10. Cependant, selon le niveau de finition du véhicule 10, celui-ci comporte un élément d'habillage 48, ou garniture, intérieur utilisé pour l'isolation phonique et thermique de l'habitacle du véhicule 10.

L' élément d'habillage 48 recouvre la totalité de la carrosserie du véhicule 10 et s'étend à distance de celle-ci pour former un volume d'air 50 réalisant l'isolation de l'habitacle.

Ainsi, comme on l'a représenté à la figure 4, le véhicule 10 comporte un élément de garniture 48 qui s'étend horizontalement en vis-à-vis et à distance de la face horizontale interne 12i du pavillon 12.

Le feu de signalisation 20 et le dispositif d'affichage 22 sont généralement de faibles dimensions et ils sont proches de la face interne 12i du pavillon 12.

Cependant, du fait de la présence de l'élément de garniture, le dispositif d'affichage 22 peut être agencé à une distance du pavillon 12 inférieure à la distance entre l'élément de garniture 48 et le pavillon 12.

Le dispositif d'affichage 22 est alors masqué par l'élément de garniture 48.

Pour remédier à ce problème, et selon une variante de réalisation de l'invention, la paroi avant 40 et la paroi inférieure 42 du boîtier 18 s'étendent au-dessous de l'élément de garniture 48, et un guide de lumière 52 est agencé à l'intérieur du boîtier 18 de manière qu'une première extrémité 52a reçoive le flux lumineux produit par le dispositif d'affichage 22, et qu'une deuxième extrémité 52b débouche dans l'ouverture 44 de la paroi avant du boîtier 18, au-dessous de l'élément de garniture 48, de manière à être visible par le conducteur.

Le feu de signalisation 20 et le dispositif d'affichage 22 comportent tous les deux des circuits électroniques différents dont les moyens de commande respectifs sont souvent agencés en deux endroits différents dans le véhicule 10.

Ainsi, le feu de signalisation 20 et le dispositif d'affichage 22 nécessitent d'être reliés à leurs moyens de commande respectifs par des circuits de câblage distincts, ce qui impose, lors de l'assemblage du véhicule 10, un grand nombre de tests et donc un accroissement des coûts de fabrication.

C'est pourquoi, selon un deuxième aspect de l'invention, le feu de signalisation 20 et le dispositif d'affichage 22 sont reliés à leurs moyens de commande respectifs par l'intermédiaire d'un unique circuit de câblage 54 dont une première extrémité (non représentée) est divisée en deux parties reliées chacune aux moyens de commande du feu de signalisation 20 ou du dispositif d'affichage 22, et dont l'autre extrémité est reliée au feu de signalisation 20 et au dispositif d'affichage 22 par l'intermédiaire d'un connecteur 56 unique.

Ce connecteur 56 permet de rassembler les circuits électroniques que le feu de signalisation 20 et le dispositif d'affichage 22 ont en commun, notamment le circuit de masse. Le connecteur 56 permet aussi de réduire les étapes d'assemblage car une seule manipulation est nécessaire pour avoir un branchement simultané du feu de signalisation 20 et du dispositif d'affichage 22.

Divers modes de réalisation de la platine porte-composants 24, 34 des deux dispositifs électroniques peuvent alors être envisagés.

Selon un premier mode de réalisation, représenté à la figure 2, le feu de signalisation 20 et le dispositif d'affichage 22 sont chacun agencés sur une platine porte-composants 24, 34 distincte.

Ce mode de réalisation permet de conserver une même structure du boîtier 18 et d'y agencer sélectivement le feu de signalisation 20 et/ou le dispositif d'affichage 22, par exemple en fonction du niveau d'équipement du véhicule 10.

Ici, les platines porte-composants 24, 34 s'étendent transversalement verticalement, parallèlement l'une par rapport à l'autre et les éléments électroluminescents 26, 36 sont agencés sur leurs faces opposées respectives.

Pour maintenir les platines porte-composants 24, 34, le boîtier 18 comporte d'une part des rainures 58 transversales réalisées sur la face supérieure 42s de la paroi inférieure qui reçoivent chacune un bord inférieur complémentaire d'une platine porte-composants 24, 34, et il comporte d'autre part une cloison horizontale 60 qui s'étend longitudinalement vers l'arrière depuis la face arrière 40b de la paroi avant 40, et qui comporte elle aussi des rainures transversales 62 qui reçoivent chacune un bord supérieur complémentaire d'une platine porte-composants 24, 34.

Selon un deuxième mode de réalisation représenté aux figure 3 et 4, le feu de signalisation 20 et le dispositif d'affichage 22 sont tous les deux portés par une même platine porte-composants 64, ce qui permet de n'avoir qu'un seul élément à fixer à l'élément structurel 38 du boîtier 18, réduisant de ce fait les étapes de montage.

Selon une première variante représentée à la figure 3, la platine porte-composants 64 s'étend horizontalement et les éléments électroluminescents 26, 36 sont agencés sur la face inférieure 64i de la platine porte-composants. Un réflecteur optique 66 est interposé entre les éléments électroluminescents 26, 36 du feu de signalisation 20 et ceux du dispositif d'affichage 22 pour séparer les flux lumineux générés par chacun des éléments. Le réflecteur 66 permet ainsi d'éviter qu'un flux lumineux ne perturbe l'autre, notamment pour éviter que le flux lumineux du feu de signalisation 20, qui est rouge, ne soit confondu par le conducteur avec un signal du dispositif d'affichage 22 de la même couleur qui est généralement interprété comme la proximité d'un obstacle.

Enfin, selon une deuxième variante représentée à la figure 4, la platine porte-composants s'étend transversalement verticalement et les composants du feu de signalisation 20 et du dispositif d'affichage 22 sont respectivement agencés sur une face opposée de la platine porte-composants 64.

Il n'est alors plus nécessaire de séparer les flux lumineux générés par chacun des éléments, ce qui simplifie encore la structure de l'ensemble.

## Revendications

1. Agencement de la partie arrière d'un véhicule (10) automobile (10) qui comporte un feu de signalisation (20) de freinage orienté vers l'extérieur du véhicule (10) et un dispositif d'affichage (22) d'une information représentative de la distance entre le véhicule (10) et un obstacle orienté globalement vers l'intérieur du véhicule (10),
**caractérisé en ce que**
- le feu de signalisation (20) et le dispositif d'affichage (22) sont agencés à l'intérieur d'un boîtier (18) fermé hermétiquement qui est formé au moins en partie par une partie de la carrosserie du véhicule (10),
- le boîtier (18) est formé en partie par une partie d'un pavillon (12) globalement horizontal de la carrosserie du véhicule (10) et/ou par une partie d'un panneau transversal arrière (14, 16) de la carrosserie du véhicule (10) qui prolonge l'extrémité longitudinale arrière du pavillon (12).

2. Agencement selon la revendication précédente, du type dans lequel le véhicule (10) automobile comporte un élément de garniture (48) intérieure qui s'étend sensiblement horizontalement, en vis-à-vis et à distance de la face inférieure (12i) interne du pavillon (12), **caractérisé en ce que** le feu de signalisation (20) et le dispositif d'affichage (22) sont agencés verticalement à une distance de l'élément de carrosserie (12) inférieure à la distance verticale entre l'élément de garniture (48) et la face inférieure (12i) de l'élément de carrosserie (12), et **en ce que** le boîtier (18) comporte un guide de lumière (52) qui guide le flux lumineux émis par des éléments électroluminescents (36) du dispositif d'affichage (22) vers une ouverture (44) du boîtier (18) agencée verticalement au-dessous de l'élément de garniture (48).

3. Agencement selon l'une des revendications 2 ou 3, **caractérisé en ce que** le panneau transversal arrière (14) comporte une ouverture (45) qui est obturée par un élément (47) perméable à la lumière qui est traversé par le flux lumineux généré par des éléments électroluminescents (26) du feu de signalisation (20)

4. Agencement selon l'une des revendications précédentes, **caractérisé en ce qu'**une paroi transversale avant (40) du boîtier (18) comporte une ouverture (44) obturée par un élément (46) perméable à la lumière qui est traversé par le flux lumineux généré par les éléments électroluminescents (36) du dispositif d'affichage (22)

5. Agencement selon l'une quelconque des revendications précédentes, du type dans lequel le feu de signalisation (20) et le dispositif d'affichage (22) comportent chacun une platine porte-composants électroniques (24, 34) qui comporte au moins une piste conductrice pour l'alimentation électrique de composants, notamment d'éléments électroluminescents (26, 36), **caractérisé en ce qu'**il comporte un unique connecteur (56) électrique d'alimentation de toutes les pistes d'alimentation électrique des éléments électroluminescents (26, 36) appartenant au feu de signalisation (20) et au dispositif d'affichage (22).

6. Agencement selon la revendication précédente, **caractérisé en ce que** les composants du feu de signalisation (20) et les composants du dispositif d'affichage (22) sont portés par une platine porte-composants commune (42).

7. Agencement selon la revendication précédente, **caractérisé en ce que** les composants du feu de signalisation (20), du dispositif d'affichage (22) respectivement, sont agencés sur une face (42i) de la platine porte-composants commune (42) respectivement.

8. Agencement selon l'une quelconque des revendications précédentes, **caractérisé en ce que** le dispositif d'affichage (22) comporte plusieurs éléments électroluminescents (36) dont au moins deux éléments électroluminescents (36) sont de couleurs différentes
